# EUROPEAN PATENT SPECIFICATION

(11) **EP 2 798 248 B1**
(45) Date of publication and mention of the grant of the patent: **21.10.2015**
(21) Application number: 13713291.6
(22) Date of filing: 14.03.2013
(51) Int. Cl.: F16K 11/048, F16K 31/06

(54) **SOLENOID VALVE ASSEMBLY WITH PILOT PRESSURE CONTROL**
MAGNETVENTILANORDNUNG MIT STEUERDRUCKREGELUNG
ENSEMBLE ÉLECTROVANNE AVEC COMMANDE DE PRESSION PILOTE

(43) Date of publication of application: 05.11.2014
(73) Proprietor: Eaton Corporation, Cleveland, OH 44122 (US)
(72) Inventor: BAMBER, Daniel, Farmington Hills, MI 48331 (US); DAYTON, Robert A., Attica, MI 48412 (US)
(74) Representative: Rüger, Barthelt & Abel
(86) International application number: PCT/US2013/031123
(87) International publication number: WO 2014/142855

(56) References cited:
- DE-A1-102006 036 615
- US-A1- 2003 213 523
- US-A1- 2012 222 634

## Description

### TECHNICAL FIELD

The present teachings generally include a solenoid valve assembly for fluid control.

### BACKGROUND

Solenoid valves can be activated by current flowing through a coil to create an electromagnetic field that causes movement of an armature within the valve. Solenoid control valves for hydraulic control systems can be used to control fluid under pressure, such as to switch latch pins in switching lifters and lash adjusters in engine valve systems:

A solenoid valve can be energized to permit fluid to flow through a control passage to the hydraulic component. The time to fill the control passage with pressurized fluid slows the desired response of the component. Additionally, if air is permitted to enter the control passage, actuation of the component by the fluid can be slower or less precise.

A valve assembly according to the preamble of independent claim 1 is known from DE 10 2006 0366 15 A1.

### SUMMARY

A valve assembly is disclosed that enables a pilot pressure to be continuously provided in a control passage to a fluid actuated component to alleviate the problem of air in the passage and to shorten actuation response time. The valve assembly includes a selectively energizable coil, a valve body, and an armature assembly. The valve body defines an interior cavity and has a primary supply port, a secondary supply port, a control port, and an exhaust port each extending to the interior cavity. The armature assembly is configured to move within the interior cavity from a first position to a second position when the coil is energized. A regulator body is operatively connected to the valve body and has an exhaust passage positioned at the exhaust port. A regulator valve in the regulator body is configured to prevent flow out of the exhaust passage when fluid pressure on the regulator valve is not greater than a predetermined pilot pressure and permit flow out of the exhaust passage when fluid pressure on the regulator valve is greater than the predetermined pilot pressure. The valve body and armature assembly are configured to permit fluid from the secondary supply port to the control port at the predetermined pilot pressure, and block flow from the primary supply port to the control port when the armature is in one of the first position and the second position. The valve body and the armature assembly are configured to permit fluid from the primary supply port to the control port at a supply pressure greater than the predetermined pilot pressure when the armature is in the other of the first position and the second position.

The above features and advantages and other features and advantages of the present teachings are readily apparent from the following detailed description of the best modes for carrying out the present teachings when taken in connection with the accompanying drawings.

### BRIEF DESCRIPTION OF THE DRAWINGS

FIGURE 1 is a schematic cross-sectional illustration of a solenoid valve assembly taken at lines 1-1 in Figure 3, showing an armature assembly in a first position, and a regulator valve in a closed position and in an open position in phantom.
FIGURE 2 is a schematic cross-sectional illustration of the solenoid valve assembly of Figure 1 with the armature assembly in a second position.
FIGURE 3 is a schematic perspective illustration of the solenoid valve assembly of Figure 1.
FIGURE 4 is a schematic side view illustration of a valve body of the solenoid valve assembly of Figures 1-3.

### DETAILED DESCRIPTION

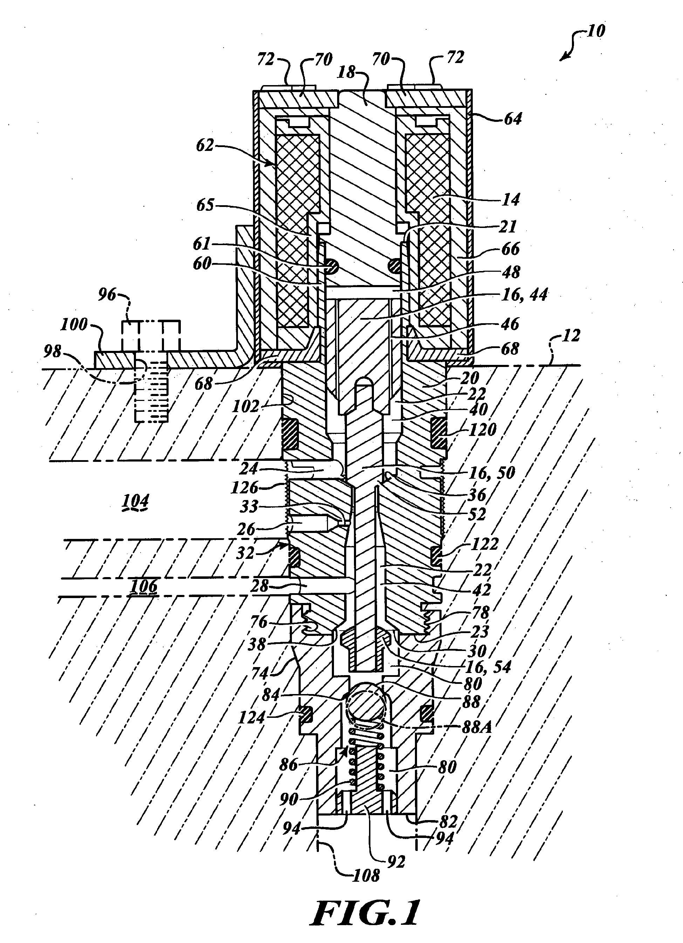

Referring to the drawings, wherein like reference numbers refer to like components throughout the several views, Figure 1 shows a valve assembly 10 mounted to an engine cylinder block 12, shown in phantom, and operable to control fluid flow within the cylinder block 12 as described herein. The valve assembly 10 can be referred to as a solenoid valve assembly as it includes an energizable coil 14 that creates an electromagnetic flux path when energized to move an armature assembly 16 toward a pole piece 18.

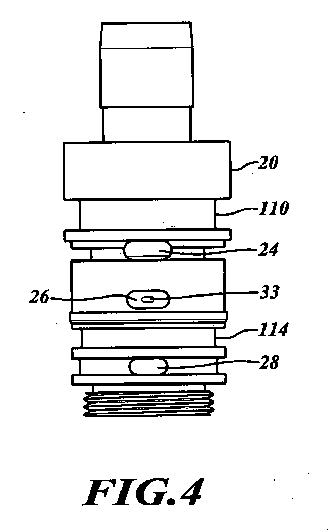

The valve assembly 10 includes a valve body 20 with an interior cavity 22 that extends through the valve body 20 from a first end 21 to a second end 23 of the valve body 20. The valve body 20 defines a primary supply port 24, a secondary supply port 26, a control port 28, and an exhaust port 30. Each of the primary supply port 24, the secondary supply port 26, and the control port 28 extend from an external surface 32 of the valve body 20 to the interior cavity 22. The secondary supply port 26 tapers to a restriction 33 that is narrower, and thus more restrictive to fluid flow than the primary supply port 24. Figure 4 shows the secondary supply port 26 and the restriction 33. The exhaust port 30 is at the second end 23 of the valve body 20.

The valve body 20 forms a first valve seat 36 and a second valve seat 38. The first valve seat 36 is between the primary supply port 24 and the secondary supply port 26. The second valve seat 38 is between the control port 28 and the exhaust port 30. Thus, both the secondary supply port 26 and the control port 28 are between the valve seats 36, 38. The valve seats 36, 38 effectively divide the interior cavity 22 into a supply chamber 40, and a control chamber 42.

The armature assembly 16 includes three separate components interconnected to move within the interior chamber 22 as a unit. First, the armature assembly 16 includes an armature 44 sized to substantially fill the interior cavity 22 adjacent the pole piece 18. The armature 44 can slide within the interior cavity in response to the energization or deenergization of the coil 14. A gap 48 between the pole piece 18 and the armature 44 can be an air gap. Passages 46 permit oil to move between the supply chamber 40 and the gap 48 as the armature 44 moves.

Second, the three piece armature assembly 16 includes a valve stem 50 that is threaded or otherwise secured to the armature 44. The valve stem 50 forms a first poppet 52 that is configured to seat at the first valve seat 36 when the armature assembly 16 is in the first position shown in Figure 1. When the first poppet 52 is seated, fluid cannot flow from the supply chamber 40 to the control chamber 42 past the first valve seat 36.

Finally, the three-piece armature assembly 16 includes a second poppet 54 that is threaded, pinched, or otherwise secured to an end of the valve stem 50. The valve stem 50 is of sufficient length so that the second poppet 54 is spaced from the second valve seat 38 when the armature assembly 16 is in the first position of Figure 1. Accordingly, fluid can flow past the second valve seat 38 from the control chamber 42.

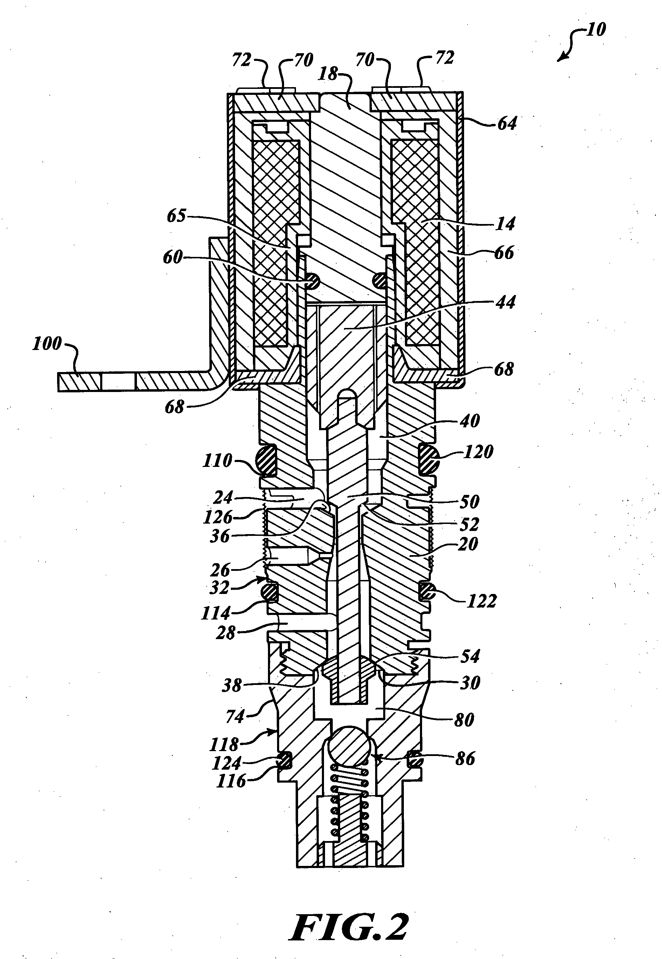

When the armature assembly 16 is moved to the second position of Figure 2, such as by energizing the coil 14 (or by deenergizing the coil 14 if the coil 14 is energized in Figure 1), with the armature assembly 16 drawn toward the pole piece 18, then the second poppet 54 will be seated at the second valve seat 38, and the first poppet 52 will be spaced from the first valve seat 36, as shown in Figure 2. When the second poppet 54 is seated at the second valve seat 38, fluid cannot flow from the control chamber 42 past the exhaust port 30. Because the first poppet 52 is spaced from the first valve seat 36, fluid can flow from the primary supply port 24 to the control chamber 42 and the control port 28.

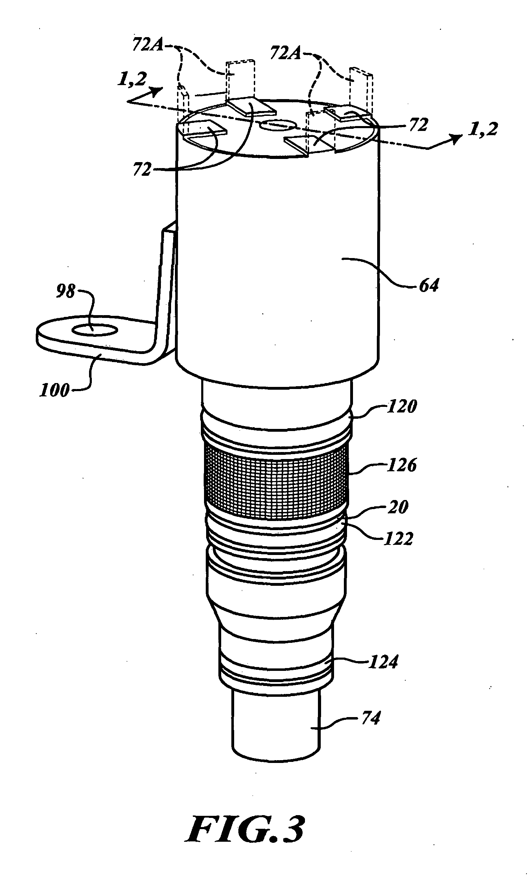

The valve body 20 includes a tubular distal portion 60 that is secured within a coil assembly 62 and solenoid can cover 64. A seal 61 fit within a groove of the pole piece 18 seals to the distal portion 60. The coil assembly 62 includes the annular coil 14 which is wound around an annular bobbin 65. A mold portion 66 surrounds the bobbin 65 and fits within the can cover 64. An annular flux collector 68 is housed in the can cover 64 on the valve body 20 surrounding the armature 44. A cap 70 overlays the bobbin 65 and surrounds an end of the pole piece 18. Tabs 72 bent from the can cover 64 secure the cap 70 within the can cover 64. Figure 3 shows the tabs 72 in a first position 72A in phantom prior to being bent.

When the coil 14 is energized, such as by a battery (not shown) that is operatively connected to the coil 14 and places a voltage across the coil 14, current will flow in the coil 14, creating a magnetic flux that causes the armature assembly 16 to move within the interior cavity 22 between the first position and the second position. In the embodiment shown herein, the armature assembly 16 is in the first position of Figure 1 when the coil 14 is not energized, and is in the second position of Figure 2 when the coil is energized. In alternative embodiments, the armature assembly 16 could be positioned relative to the coil 14 differently so that the armature assembly 16 would move from the second position to the first position when the coil 14 is energized.

The valve assembly 10 also includes a regulator body 74 that is secured to the valve body 20 at the second end 23 distant from the coil 14. The regulator body 74 has internal threads 76 that thread to external threads 78 of the valve body 20 adjacent the exhaust port 30. Alternatively, the regulator body 74 could be connected to the valve body 20 by bonding, press-fitting, or other means.

The regulator body 74 has an exhaust passage 80 that is aligned with the exhaust port 30 and extends through the regulator body 74 to a terminal end 82 of the regulator body 74. The regulator body 74 has a valve seat 84, referred to herein as a regulator valve seat, in the exhaust passage 80. A regulator valve 86 is positioned in the regulator body 74. The regulator valve 86 includes a check ball 88 and a spring 90 biasing the check ball 88 against the regulator valve seat 84. A plug 92 is configured to seat in the exhaust passage 80. The plug 92 has orifices 94 that permit fluid to pass from the exhaust passage 80 through the plug 92. The plug 92 is configured to support the spring 90 against the check ball 88. Although a ball 88 and spring 90 are used for the regulator valve 86, other types of valves that are biased to a closed position and that open in response to a predetermined pressure can be used instead.

The valve assembly 10 can be fastened to the cylinder block 12 via a bolt 96 (shown in phantom) or other fastener that extends through an opening 98 in a mounting bracket 100 to secure the valve assembly 10 within a valve bore 102 in the cylinder block 12. The cylinder block 12 has a supply passage 104, a control passage 106 and a sump passage 108. The supply passage 104 carries pressurized fluid, such as from a fluid pump. The control passage 106 directs the pressurized fluid to a fluid actuated component (not shown) such as an engine valve lifter. The sump passage 108 leads to a sump (not shown) for fluid exhausted from the valve assembly 10. The sump is fluidly connected to a pump that then recirculates the fluid to the supply passage 104 as needed.

The valve body 20 and regulator body 74 are configured so that when the valve assembly 10 is placed in the valve bore 102, the primary supply port 24 and the secondary supply port 26 are in fluid communication with the supply passage 104, and the control port 28 is in fluid communication with the control passage 106.

As best shown in Figure 2, the valve assembly 10 includes a first annular groove 110 on the external surface 32 of the valve body 20, and a second annular groove 114 also on the external surface 32. The regulator body 74 has a third annular groove 116 on an external surface 118 of the regulator body 74. A first seal 120 is in the first annular groove 110, a second seal 122 is in the second annular groove 114, and a third seal 124 is in the third annular groove 116. Each of the seals 120, 122, 124 is a compliant O-ring seal. Other suitable types of seals can be used instead of O-ring seals. When the valve assembly 10 is placed in the cylinder bore 102, the compliant seals 120, 122 are compressed between the valve body 20 and the cylinder head 12, and the compliant seal 124 is compressed between the regulator body 74 and the cylinder head 12. The supply passage 104, the primary supply port 24, and the secondary supply port 26 are between the first and second seals 120, 122. A wire mesh filter 126 is secured around the valve body 20 to filter fluid entering the primary supply port 24 and the secondary supply port 26. The control passage 106 and the control port 28 are between the second and third seals 122, 124. The seals 120, 122, 124 thus prevent air outside of the cylinder block 12 from reaching the passages 104, 106, 108, and help to ensure the integrity of the various fluid routes through the valve assembly 10 and cylinder block 12. In Figure 4, the seals 120, 122 are removed from the valve body 20 to show the grooves 110, 114

The regulator valve 86 is a passive feature of the valve assembly 10 that functions in conjunction with the actively actuated armature assembly 16 to maintain a predetermined pilot pressure in the control chamber 42 and the control passage 106 when the armature assembly 16 is in the first position of Figure 1. With the first poppet 52 seated at the first valve seat 36, supply fluid cannot pass from the supply passage 104 to the control chamber 42 and control passage 106. The armature assembly 16 will be in the first position with the first poppet 52 seated when it is not desired to provide fluid through the control passage 106, such as when it is not desired to actuate a fluid component in communication with the control passage 106. Accordingly, the controller (not shown) does not activate the valve assembly 10. Fluid from the supply passage 104 is able to enter the control chamber 42 via the secondary supply port 26, however, as the secondary supply port 26 is between the first valve seat 36 and the second valve seat 38. The fluid that enters through the secondary supply port 26 will pass from the control chamber 42 to both the control passage 106 and the exhaust passage 80. Because of the restriction 33 in the secondary supply port 26, fluid supplied through the secondary supply port 26 will be at a lower pressure than in the supply passage 104. The restriction 33 can be sized so that the rate of fluid flow through the restriction 33 is equal to the rate of leakage from the control passage 106 downstream of the valve assembly 10. Thus, once the control passage 106 is primed with the fluid at the predetermined pressure through the secondary supply port 26, the control passage 106 will remain filled with fluid at that pressure.

The predetermined pressure is lower than a pressure required to actuate a fluid actuated component downstream of the control passage 106. Moreover, the regulator valve 86 is configured to ensure that the fluid pressure in the control chamber 42, control passage 106 and exhaust passage 80 does not rise above the predetermined pressure, so that the fluid actuated component is not unintentionally actuated. Specifically, the spring 90 has a stiffness than causes it to compress when fluid at a fluid pressure greater than the predetermined pressure acts on the check ball 88, moving the check ball 88 to the open position 88A shown in phantom. With the check ball 88 in the open position 88A, fluid exhausts from the control chamber 42 to the exhaust passage 80 past the valve seat 84, and out through orifices 94 in the plug 92. When fluid pressure is relieved in this manner, the force of the spring 90 on the check ball 88 will then overcome the force of the fluid on the check ball 88 to move the check ball 88 back to the closed position shown, so that the pressure within the chamber 42 will return to a pressure not greater than the predetermined pressure. Thus, because the secondary supply port 26 is in fluid communication with the supply chamber 40 between the two poppets 52, 54, any fluid pressure spikes that occur while the armature assembly 16 is in the first position of Figure 1 will be relieved by the regulator valve 86.

When it is desired to actuate a fluid-actuated component downstream of the control passage 106, the electronic controller (not shown) operatively connected to the coil 14 through an electrical connector (not shown) controls a battery (not shown) to provide a voltage that causes current flow in the coil 14. The electrical connector can attach to the can 64 and extend through to the coil 14. The armature assembly 16 will be drawn toward the pole piece 18 (upward in Figure 2), lifting the first poppet 52 off of the first valve seat 36 and seating the second poppet 54 at the second valve seat 38, as shown in Figure 2. With the armature assembly 16 in the second position of Figure 2, the first supply port 24 is in fluid communication with the control chamber 42, the control port 28, and the control passage 106 of Figure 1 so that fluid is provided from the first supply port 24 to the control passage 106 at the supply pressure to actuate the fluid-actuated component. Fluid can also be provided through the secondary supply port 26 when the armature assembly 16 is in the second position. The pressure in the control chamber 42 and in the control passage 106 will be dictated by the higher supply pressure that can pass via the primary supply port 24.

When the armature assembly 16 is in the second position of Figure 2, the regulator valve 86 does not affect the fluid pressure in the control chamber 42 as the seated second poppet 52 blocks any flow from reaching the regulator valve 96. The regulator valve 86 is thus configured to prevent flow out of the exhaust passage 80 when fluid pressure on the regulator valve 86 is not greater than the predetermined pilot pressure and permit flow out of the exhaust passage 80 when fluid pressure on the regulator valve 86 is greater than the predetermined pilot pressure and the armature assembly 16 is in the first position. The regulator valve 86 enables the control passage 106 to be precharged with fluid at the relatively low predetermined pilot pressure, enabling faster actuation of a fluid component when the valve assembly 16 is moved to the second position.

The reference numbers used in the drawings and the specification along with the corresponding components or method steps is as follows:
10 valve assembly
12 cylinder block
14 coil
16 armature assembly
18 pole piece
20 valve body
21 first end of valve body
22 interior cavity
23 second end of valve body
24 primary supply port
26 secondary supply port
28 control port
30 exhaust port
32 external surface of valve body
33 restriction
36 first valve seat
38 second valve seat
40 supply chamber
42 control chamber
44 armature
46 passages in armature
48 gap
50 valve stem
52 first poppet
54 second poppet
60 distal portion
61 seal
62 coil assembly
64 can cover
65 annular bobbin
66 mold portion
68 flux collector
70 cap
72 security tabs
72A first position of security tabs
74 regulator body
76 internal threads
78 external threads
80 exhaust passage
82 terminal end
84 regulator valve seat
86 regulator valve
88 check ball
88A open position of check ball
90 spring
92 plug
94 orifice
96 bolt
98 opening
100 mounting bracket
102 valve bore
104 supply passage
106 control passage
108 sump passage
110 first annular groove
114 second annular groove
116 third annular groove
118 external surface of regulator body
120 first seal
122 second seal
124 third seal
126 wire mesh filter

While the best modes for carrying out the many aspects of the present teachings have been described in detail, those familiar with the art to which these teachings relate will recognize various alternative aspects for practicing the present teachings that are within the scope of the appended claims.

## Claims

1. A valve assembly (10) comprising:
a selectively energizable coil (14);
a valve body (20) that defines an interior cavity (22) and has a primary supply port (24), a secondary supply port (26), a control port (28), and an exhaust port (30) each extending to the interior cavity;
an armature assembly (16) configured to move within the interior cavity from a first position to a second position when the coil is energized;
a regulator body (74) operatively connected to the valve body and having an exhaust passage (80) positioned at the exhaust port;
a regulator valve (86) positioned in the regulator body and configured to prevent fluid flow out of the exhaust passage when fluid pressure on the regulator valve is not greater than a predetermined pilot pressure, and configured to permit fluid flow out of the exhaust passage (30) when fluid pressure on the regulator valve is greater than the predetermined pilot pressure; and **characterised in that**
the valve body (20) and armature assembly (16) are configured to permit fluid flow from the secondary supply port (26) to the control port (28) at the predetermined pilot pressure and block fluid flow from the primary supply port (24) to the control port (28) when the armature (16) is in one of the first position and the second position; and wherein the valve body (20) and the armature assembly (16) are configured to permit fluid flow from the primary supply port (24) to the control port (28) at a supply pressure greater than the predetermined pilot pressure when the armature (16) is in the other of the first position and the second position.

2. The valve assembly of claim 1, wherein the regulator body includes a regulator valve seat (84); and wherein the regulator valve includes a check ball (88) and a spring (90) biasing the check ball against the regulator valve seat.

3. The valve assembly of claim 2, further comprising:
a plug (92) configured to seat in the exhaust passage; wherein the plug has an orifice (94) that permits fluid to pass through the plug; and
wherein the plug is configured to support the spring.

4. The valve assembly of claim 1, wherein the exhaust port is further from the coil than the primary supply port.

5. The valve assembly of claim 1, wherein the valve body defines a first valve seat (36) between the primary supply port and the control port, and a second valve seat (38) between the control port and the exhaust port; wherein the secondary supply port is in fluid communication with the interior cavity and the control port between the first valve seat and the second valve seat;
wherein the armature assembly has a first poppet (52) and a second poppet (54); wherein the first poppet is configured to seat at the first valve seat and the second poppet is configured to be spaced from the second valve seat when the armature is in the first position; and wherein the first poppet is configured to be spaced from the first valve seat and the second poppet is configured to be seated at the second valve seat when the armature is in the second position.

6. The valve assembly of claim 5, wherein first seat is closer to the coil than the second seat, and the second seat is closer to the exhaust port than the first seat.

7. The valve assembly of claim 1, further comprising:
a first seal (120) on an external surface (118) of the valve body;
a second seal (122) on the external surface of the valve body;
a third seal (124) on the external surface of the regulator body;
wherein the primary and secondary supply ports are between the first seal and the second seal; and wherein the control port is between the second seal and the third seal.

8. A valve assembly (10) comprising:
a selectively energizable coil (14);
a valve body (20) defining an interior cavity (22) and having a primary supply port (24), a secondary supply port (26), a control port (28), and an exhaust port (30), each of the ports extending through the valve body to the interior cavity; wherein the valve body defines a first valve seat (36) between the primary supply port and the control port, and defines a second valve seat (38) between the control port and the exhaust port; wherein the secondary supply port is in fluid communication with the interior cavity and with the control port between the first valve seat and the second valve seat;
an armature assembly (16) configured to move within the interior cavity due to magnetic flux when the coil is energized; wherein the armature assembly has a first poppet (52) and a second poppet (54); wherein the first poppet is configured to seat at the first valve seat and the second poppet is configured to be spaced from the second valve seat when the coil is not energized; wherein the first poppet is configured to be spaced from the first valve seat and the second poppet is configured to be seated at the second valve seat when the coil is energized;
a regulator body (74) operatively connected to the valve body and having an exhaust passage (80) in fluid communication with the exhaust port; and
a regulator valve (86) positioned in the regulator body and configured to block the exhaust passage when fluid pressure on the regulator valve is not greater than a predetermined pilot pressure, and configured to unblock the exhaust passage when fluid pressure on the regulator valve is greater than the predetermined pilot pressure; fluid thereby being permitted to the enter control port only through the secondary supply port at the predetermined pilot pressure when the coil is not energized, and being permitted to enter the control port through the primary supply port at a supply pressure greater than the predetermined pilot pressure when the coil is energized.

9. The valve assembly of claim 8, wherein the regulator body includes a regulator valve seat (84); and wherein the regulator valve includes a check ball (88) and a spring (90) biasing the check ball against the regulator valve seat.

10. The valve assembly of claim 8, further comprising:
a plug (92) configured to seat in the exhaust passage; wherein the plug has an orifice (94) that permits fluid to pass through the plug; and
wherein the plug is configured to support the spring.

11. The valve assembly of claim 8, wherein the exhaust port is further from the coil than the primary supply port.

12. The valve assembly of claim 8, further comprising:
a first seal (120) on an external surface (118) of the valve body;
a second seal (122) on the external surface of the valve body;
a third seal (124) on the external surface of the regulator body;
wherein the primary and secondary supply ports are between the first seal and the second seal; and wherein the control port is between the second seal and the third seal.

13. The valve assembly of claim 12 in combination with a cylinder block (12) having a bore (102); wherein the cylinder block has a supply passage (104), a control passage (106), and a sump passage (108) each of which is in communication with the bore;
wherein the valve body and the regulator body are configured to fit within the bore with the first seal, the second seal, and the third seal sealing to the cylinder block so that the primary supply port and the secondary supply port are in communication with the supply passage, the control port is in communication with the control passage, and the exhaust port is in communication with the sump passage; the secondary supply port thus providing fluid to the control passage; and
wherein the secondary supply port is configured to be more restrictive than the primary supply port.

14. The valve assembly of claim 13, wherein the secondary supply port is configured to permit supply fluid to the control passage substantially at a rate of leakage of fluid from the control passage.

15. The valve assembly of claim 8, wherein the valve body has a first annular groove (110) and a second annular groove (114); wherein the regulator body has a third annular groove (116);
wherein the first seal is a first O-ring in the first annular groove;
wherein the second seal is a second O-ring in the second annular groove; and
wherein the third seal is a third O-ring in the third annular groove.

## Patentansprüche

1. Ventilanordnung (10), die aufweist:
eine wahlweise erregbare Spule (14);
einen Ventilkörper (20), der einen inneren Hohlraum (22) definiert und einen primären Versorgungsanschluss (24), einen sekundären Versorgungsanschluss (26), einen Steueranschluss (28) und einen Auslassanschluss (30) aufweist, die sich jeweils zu dem inneren Hohlraum erstrecken;
eine Ankeranordnung (16), die eingerichtet ist, um sich innerhalb des inneren Hohlraums von einer ersten Position zu einer zweiten Position zu bewegen, wenn die Spule erregt ist;
einen Reglerkörper (74), der mit dem Ventilkörper betriebsmäßig verbunden ist und einen Auslasskanal (80) aufweist, der an dem Auslassanschluss positioniert ist;
ein Reglerventil (86), das in dem Reglerkörper positioniert und eingerichtet ist, um einen Fluidabfluss aus dem Auslasskanal zu verhindern, wenn ein Fluiddruck an dem Reglerventil nicht größer ist als ein vorbestimmter Steuerdruck, und eingerichtet ist, um einen Fluidabfluss aus dem Auslasskanal (30) zuzulassen, wenn der Fluiddruck an dem Reglerventil größer ist als der vorbestimmte Steuerdruck; und
**dadurch gekennzeichnet, dass**
der Ventilkörper (20) und die Ankeranordnung (16) eingerichtet sind, um einen Fluidfluss von dem sekundären Versorgungsanschluss (26) zu dem Steueranschluss (28) bei dem vorbestimmten Steuerdruck zuzulassen und einen Fluidfluss von dem primären Versorgungsanschluss (24) zu dem Steueranschluss (28) zu sperren, wenn sich der Anker (16) in einer von der ersten Position und der zweiten Position befindet; und wobei der Ventilkörper (20) und die Ankeranordnung (16) eingerichtet sind, um einen Fluidfluss von dem primären Versorgungsanschluss (24) zu dem Steueranschluss (28) bei einem Versorgungsdruck, der größer ist als der vorbestimmte Steuerdruck, zuzulassen, wenn sich der Anker (16) in der anderen von der ersten Position und der zweiten Position befindet.

2. Ventilanordnung nach Anspruch 1, wobei der Reglerkörper einen Reglerventilsitz (84) enthält; und wobei das Reglerventil eine Rückschlagkugel (88) und eine Feder (90) enthält, die die Rückschlagkugel gegen den Reglerventilsitz vorspannt.

3. Ventilanordnung nach Anspruch 2, die ferner aufweist:
einen Stopfen (92), der eingerichtet ist, um in dem Auslasskanal zu sitzen; wobei der Stopfen eine Durchlassöffnung (94) aufweist, die einem Fluid ermöglicht, durch den Stopfen hindurchzutreten; und
wobei der Stopfen eingerichtet ist, um die Feder zu stützen.

4. Ventilanordnung nach Anspruch 1, wobei der Auslassanschluss von der Spule weiter entfernt ist als der primäre Versorgungsanschluss.

5. Ventilanordnung nach Anspruch 1, wobei der Ventilkörper einen ersten Ventilsitz (36) zwischen dem primären Versorgungsanschluss und dem Steueranschluss und einen zweiten Ventilsitz (38) zwischen dem Steueranschluss und dem Auslassanschluss definiert; wobei der sekundäre Versorgungsanschluss mit dem inneren Hohlraum und dem Steueranschluss zwischen dem ersten Ventilsitz und dem zweiten Ventilsitz in Fluidverbindung steht;
wobei die Ankeranordnung einen ersten Ventilteller (52) und einen zweiten Ventilteller (54) aufweist; wobei der erste Ventilteller eingerichtet ist, um auf dem ersten Ventilschlitz aufzusitzen, und der zweite Ventilteller eingerichtet ist, um von dem zweiten Ventilsitz beabstandet zu sein, wenn der Anker sich in der ersten Position befindet; und wobei der erste Ventilteller eingerichtet ist, um von dem ersten Ventilsitz beabstandet zu sein, und der zweite Ventilteller eingerichtet ist, um auf dem zweiten Ventilsitz aufzusitzen, wenn der Anker sich in der zweiten Position befindet.

6. Ventilanordnung nach Anspruch 5, wobei der erste Sitz sich näher an der Spule befindet als der zweite Sitz und der zweite Sitz sich näher an dem Auslassanschluss befindet als der erste Sitz.

7. Ventilanordnung nach Anspruch 1, die ferner aufweist:
eine erste Dichtung (120) an einer äußeren Oberfläche (118) des Ventilkörpers;
eine zweite Dichtung (122) an der äußeren Oberfläche des Ventilkörpers;
eine dritte Dichtung (124) an der äußeren Oberfläche des Reglerkörpers;
wobei der primäre und der sekundäre Versorgungsanschluss sich zwischen der ersten Dichtung und der zweiten Dichtung befinden; und wobei der Steueranschluss sich zwischen der zweiten Dichtung und der dritten Dichtung befindet.

8. Ventilanordnung (10), die aufweist:
eine wahlweise erregbare Spule (14);
einen Ventilkörper (20), der einen inneren Hohlraum (22) definiert und einen primären Versorgungsanschluss (24), einen sekundären Versorgungsanschluss (26), einen Steueranschluss (28) und einen Auslassanschluss (30) aufweist, wobei sich jeder der Anschlüsse durch den Ventilkörper hindurch zu dem inneren Hohlraum erstreckt; wobei der Ventilkörper einen ersten Ventilsitz (36) zwischen dem primären Versorgungsanschluss und dem Steueranschluss definiert und einen zweiten Ventilsitz (38) zwischen dem Steueranschluss und dem Auslassanschluss definiert; wobei der sekundäre Versorgungsanschluss mit dem inneren Hohlraum und mit dem Steueranschluss zwischen dem ersten Ventilsitz und dem zweiten Ventilsitz in Fluidverbindung steht;
eine Ankeranordnung (16), die eingerichtet ist, um sich aufgrund eines Magnetflusses, wenn die Spule erregt ist, innerhalb des inneren Hohlraums zu bewegen; wobei die Ankeranordnung einen ersten Ventilteller (52) und einen zweiten Ventilteller (54) aufweist; wobei der erste Ventilteller eingerichtet ist, um auf dem ersten Ventilsitz aufzusitzen, und der zweite Ventilteller eingerichtet ist, um von dem zweiten Ventilsitz beabstandet zu sein, wenn die Spule nicht erregt ist; wobei der erste Ventilteller eingerichtet ist, um von dem ersten Ventilsitz beabstandet zu sein, und der zweite Ventilteller eingerichtet ist, um auf dem zweiten Ventilsitz aufzusitzen, wenn die Spule erregt ist;
einen Reglerkörper (74), der mit dem Ventilkörper betriebsmäßig verbunden ist und einen Auslasskanal (80) aufweist, der mit dem Auslassanschluss in Fluidverbindung steht; und
ein Reglerventil (86), das in dem Reglerkörper angeordnet und eingerichtet ist, um den Auslasskanal zu sperren, wenn ein Fluiddruck an dem Reglerventil nicht größer ist als ein vorbestimmter Steuerdruck, und das eingerichtet ist, um den Auslasskanal freizugeben, wenn ein Fluiddruck an dem Reglerventil größer ist als der vorbestimmte Steuerdruck; wobei dadurch einem Fluid ermöglicht wird, in den Steueranschluss nur durch den sekundären Versorgungsanschluss bei dem vorbestimmten Steuerdruck einzutreten, wenn die Spule nicht erregt ist, und ermöglicht wird, in den Steueranschluss durch den primären Versorgungsanschluss bei einem Versorgungsdruck einzutreten, der größer ist als der vorbestimmte Steuerdruck, wenn die Spule erregt ist.

9. Ventilanordnung nach Anspruch 8, wobei der Reglerkörper einen Reglerventilsitz (84) enthält; und wobei das Reglerventil eine Rückschlagkugel (88) und eine Feder (90) enthält, die die Rückschlagkugel gegen den Reglerventilsitz vorspannt.

10. Ventilanordnung nach Anspruch 8, die ferner aufweist:
einen Stopfen (92), der eingerichtet ist, um in dem Auslasskanal zu sitzen; wobei der Stopfen eine Durchlassöffnung (94) aufweist, die einem Fluid ermöglicht, durch den Stopfen hindurchzutreten; und
wobei der Stopfen eingerichtet ist, um die Feder zu stützen.

11. Ventilanordnung nach Anspruch 8, wobei der Auslassanschluss von der Spule weiter entfernt ist als der primäre Versorgungsanschluss.

12. Ventilanordnung nach Anspruch 8, die ferner aufweist:
eine erste Dichtung (120) an einer äußeren Oberfläche (118) des Ventilkörpers;
eine zweite Dichtung (122) an der äußeren Oberfläche des Ventilkörpers;
eine dritte Dichtung (124) an der äußeren Oberfläche des Reglerkörpers;
wobei der primäre und der sekundäre Versorgungsanschluss sich zwischen der ersten Dichtung und der zweiten Dichtung befinden; und wobei sich der Steueranschluss zwischen der zweiten Dichtung und der dritten Dichtung befindet.

13. Ventilanordnung nach Anspruch 12 in Kombination mit einem Zylinderblock (12) mit einer Bohrung (102); wobei der Zylinderblock einen Versorgungskanal (104), einen Steuerkanal (106) und einen Sumpfkanal (108) aufweist, die jeweils mit der Bohrung in Verbindung stehen;
wobei der Ventilkörper und der Reglerkörper eingerichtet sind, um in die Bohrung zu passen, wobei die erste Dichtung, die zweite Dichtung und die dritte Dichtung an dem Zylinderblock abdichten, so dass der primäre Versorgungsanschluss und der sekundäre Versorgungsanschluss mit dem Versorgungskanal in Verbindung stehen, der Steueranschluss mit dem Steuerkanal in Verbindung steht und der Auslasskanal mit dem Sumpfkanal in Verbindung steht; wobei der sekundäre Versorgungsanschluss somit ein Fluid dem Steuerkanal zuführt; und
wobei der sekundäre Versorgungsanschluss eingerichtet ist, um mehr beschränkend zu sein als der primäre Versorgungsanschluss.

14. Ventilanordnung nach Anspruch 13, wobei der sekundäre Versorgungsanschluss eingerichtet ist, um eine Zufuhr eines Fluids zu dem Steuerkanal im Wesentlichen mit einer Rate einer Fluidleckage aus dem Steuerkanal zu ermöglichen.

15. Ventilanordnung nach Anspruch 8, wobei der Ventilkörper eine erste Ringnut (110) und eine zweite Ringnut (114) aufweist; wobei der Reglerkörper eine dritte Ringnut (116) aufweist;
wobei die erste Dichtung ein erster O-Ring in der ersten Ringnut ist;
wobei die zweite Dichtung ein zweiter O-Ring in der zweiten Ringnut ist; und
wobei die dritte Dichtung ein dritter O-Ring in der dritten Ringnut ist.

## Revendications

1. Ensemble de soupape (10) comprenant :
une bobine pouvant être excitée sélectivement (19) ;
un corps de soupape (20) qui définit une cavité intérieure (22) et a un orifice d'alimentation primaire (24), un orifice d'alimentation secondaire (26), un orifice de commande (28) et un orifice d'échappement (30) s'étendant chacun vers la cavité intérieure ;
un ensemble d'armature (16) configuré pour se déplacer dans la cavité intérieure d'une première position une deuxième position lorsque la bobine est excitée ;
un corps de régulateur (74) relié de manière fonctionnelle au corps de soupape et ayant un passage d'échappement (80) positionné au niveau de l'orifice d'échappement ;
une soupape de régulateur (86) positionnée dans le corps de régulateur et configurée pour empêcher un écoulement de fluide hors du passage d'échappement lorsque la pression de fluide s'exerçant sur la soupape de régulateur n'est pas supérieure à une pression pilote prédéterminée, et configurée pour permettre un écoulement de fluide hors du passage d'échappement (30) lorsque la pression de fluide s'exerçant sur la soupape de régulateur est supérieure à la pression pilote prédéterminée ; et **caractérisé en ce que**
le corps de soupape (20) et l'ensemble d'armature (16) sont configurés pour permettre un écoulement de fluide de l'orifice d'alimentation secondaire (26) à l'orifice de commande (28) à la pression pilote prédéterminée et pour bloquer un écoulement du fluide de l'orifice d'alimentation primaire (24) à l'orifice de commande (28) lorsque l'armature (16) se trouve dans l'une de la première position et de la deuxième position ; et où le corps de soupape (2C) et l'ensemble d'armature (16) sont configurés pour permettre un écoulement de fluide de l'orifice d'alimentation primaire (24) à l'orifice de commande (28) à une pression d'alimentation supérieure à à pression pilote prédéterminée lorsque armature (16) se trouve dans l'autre position de la première position et de la deuxième position.

2. Ensemble de soupape de la revendication 1, dans lequel le corps de régulateur comporte un siège de soupape de régulateur (84) : et dans lequel la soupape de régulateur comporte une bille de non-retour (88) et un ressort (90) sollicitant la bille de non-retour contre le siège de soupape de régulateur.

3. Ensemble de soupape de la revendication 2, comprenant en outre :
un obturateur (92) configuré pour se placer dans le passage d'échappement ; où l'obturateur a un orifice (94) qui permet au fluide de traverser l'obturateur ; et
où l'obturateur est configuré pour supporter le ressort.

4. Ensemble de soupape de la revendication 1, dans lequel l'orifice d'échappement est plus éloigné de la bobine que l'orifice d'alimentation primaire.

5. Ensemble de soupape de à revendication 1, dans lequel le corps de soupape définit un premier siège de soupape (36) entre l'orifice d'alimentation primaire et l'orifice de commande, et un deuxième siège de soupape (38) entre l'orifice de commande et l'orifice d'échappement ; où l'orifice d'alimentation secondaire est en communication fluidique avec la cavité intérieure et l'orifice de commande entre le premier siège de soupape et le deuxième siège de soupape ;
où l'ensemble d'armature a un premier champignon (52) et un deuxième champignon (54) ; où le premier champignon est configuré pour se placer au niveau du premier siège de soupape et le deuxième champignon est configuré pour être espacé du deuxième siège de soupape lorsque l'armature se trouve dans la première position ; et où le premier champignon est configuré pour être espacé du premier siège de soupape et le deuxième champignon est configuré pour être placé au niveau du deuxième siège de soupape lorsque l'armature se trouve dans la deuxième position.

6. Ensemble de soupape de la revendication 5, dans lequel le premier siège est plus proche de la bobine que le deuxième siège, et le deuxième siège est plus proche de l'orifice d'échappement que le premier siège.

7. Ensemble de soupape de la revendication 1, comprenant en outre :
un premier joint d'étanchéité (120) sur une surface externe (118) du corps de soupape ;
un deuxième joint d'étanchéité (122) sur la surface externe du corps de soupape ;
un troisième joint d'étanchéité (124) sur la surface externe du corps de régulateur ;
où les orifices d'alimentation primaire et secondaire se trouvent entre le premier joint d'étanchéité et le deuxième joint d'étanchéité ; et où l'orifice de commande se trouve entre le deuxième joint d'étanchéité et le troisième joint d'étanchéité.

8. Ensemble de soupape (10) comprenant :
une bobine pouvant être excitée sélectivement (14) ;
un corps de soupape (20) définissant une cavité intérieure (22) et ayant un orifice d'alimentation primaire (24), un orifice d'alimentation secondaire (26), un orifice de commande (28) et un orifice d'échappement (30), chacun des orifices s'étendant à travers le corps de soupape vers à cavité intérieure ; où le corps de soupape définit un premier siège de soupape (36) entre l'orifice d'alimentation primaire et l'orifice de commande, et définit un deuxième siège de soupape (38) entre l'orifice de commande et l'orifice d'échappement ; où l'orifice d'alimentation secondaire est en communication fluidique avec la cavité intérieure et avec l'orifice de commande entre le premier siège de soupape et le deuxième siège de soupape ;
un ensemble d'armature (16) configuré pour se déplacer dans la cavité intérieure sous l'effet d'un flux magnétique lorsque à bobine est excitée ; où l'ensemble d'armature a un premier et champignon (52) un deuxième champignon (54) ; où le premier champignon est configuré pour se placer au niveau du premier siège de soupape et le deuxième champignon est configuré pour être espacé du deuxième siège de soupape lorsque la bobine n'est pas excitée ; où le premier champignon est configuré pour être espacé du premier siège de soupape et le deuxième champignon est configuré pour être placé au niveau du deuxième siège de soupape lorsque la bobine est excitée ;
un corps de régulateur (74) relié de manière fonctionnelle au corps de soupape et ayant un passage d'échappement (80) en communication fluidique avec l'orifice d'échappement ; et
une soupape de régulateur (86) positionnée dans le corps de régulateur et configurée pour bloquer le passage d'échappement lorsque la pression de fluide s'exerçant sur la soupape de régulateur n'est pas supérieure à une pression pilote prédéterminée, et configurée pour débloquer le passage d'échappement lorsque la pression de fluide s'exerçant sur la soupape de régulateur est supérieure à la pression pilote prédéterminée ; le fluide étant ainsi autorisé à rentrer dans l'orifice de commande uniquement à travers l'orifice d'alimentation secondaire à à pression pilote prédéterminée lorsque la bobine n'est pas excitée, et étant autorisé à rentrer dans l'orifice de commande à travers l'orifice d'alimentation primaire à une pression d'alimentation supérieure à la pression pilote prédéterminée lorsque la bobine est excitée.

9. Ensemble de soupape de la revendication 8, dans lequel le corps de régulateur comporte un siège de soupape de régulateur (84) ; et dans lequel la soupape de régulateur comporte une bille de non-retour (88) et un ressort (90) sollicitant la bille de non-retour contre le siège de soupape de régulateur.

10. Ensemble de soupape de la revendication 8, comprenant en outre :
un obturateur (92) configuré pour se placer dans le passage d'échappement ; où l'obturateur a un orifice (94) qui permet au fluide de traverser l'obturateur ; et
où l'obturateur est configuré pour supporter le ressort.

11. Ensemble de soupape de la revendication 8, dans lequel l'orifice d'échappement est plus éloigné de la bobine que l'orifice d'alimentation primaire.

12. Ensemble de soupape de la revendication 8, comprenant en outre :
un premier joint d'étanchéité (120) sur une surface externe (118) du corps de soupape ;
un deuxième joint d'étanchéité (122) sur à surface externe du corps de soupape ;
un troisième joint d'étanchéité (124) sur la surface externe du corps de régulateur ;
où les orifices d'alimentation primaire et secondaire se trouvent entre le premier joint d'étanchéité et le deuxième joint d'étanchéité ; et où l'orifice de commande se trouve entre le deuxième joint d'étanchéité et le troisième joint d'étanchéité.

13. Ensemble de soupape de la revendication 12 en combinaison avec un bloc-cylindres (12) ayant un alésage (102) ; où le bloc-cylindres a un passage d'alimentation (104), un passage de commande (106) et un passage de carter d'huile (108) dont chacun est en communication avec l'alésage ;
où le corps de soupape et le corps de régulateur sont configurés pour s'ajuster dans l'alésage avec le premier joint d'étanchéité, le deuxième joint d'étanchéité, et le troisième joint d'étanchéité assurant l'étanchéité avec le bloc-cylindres de sorte que l'orifice d'alimentation primaire et l'orifice d'alimentation secondaire soient en communication avec le passage d'alimentation, l'orifice de commande soit en communication avec le passage de commande et l'orifice d'échappement soit en communication avec le passage de carter d'huile ; l'orifice d'alimentation secondaire fournissant ainsi du fluide au passage de commande ; et
où l'orifice d'alimentation secondaire est configuré pour être plus restrictif que l'orifice d'alimentation primaire.

14. Ensemble de soupape de la revendication 13, dans lequel l'orifice d'alimentation secondaire est configuré pour permettre une alimentation de fluide au passage de commande substantiellement à un taux de fuite de fluide depuis le passage de commande.

15. Ensemble de soupape de la revendication 8, dans lequel le corps de soupape a une première rainure annulaire (110) et une deuxième rainure annulaire (114) ; où le corps de régulateur a une troisième rainure annulaire (116) ;
où le premier joint d'étanchéité est un premier joint torique d'étanchéité dans la première rainure annulaire ;
où le deuxième joint d'étanchéité est un deuxième joint torique d'étanchéité dans à deuxième rainure annulaire ; et
où le troisième joint d'étanchéité est un troisième joint torique d'étanchéité dans la troisième rainure annulaire.
